# EUROPÄISCHE PATENTSCHRIFT

(11) **EP 0 514 713 B1**
(45) Veröffentlichungstag und Bekanntmachung des Hinweises auf die Patenterteilung: **02.11.1995**
(21) Anmeldenummer: 92107717.8
(22) Anmeldetag: 07.05.1992
(51) Int. Cl.: B23H 7/02

(54) **Verfahren zur Bearbeitung von Werkstücken, insbesondere zur funkenerosiven Bearbeitung von Werkstücken mittels eines Drahtes und Mittel zur Sicherung von Formstücken bei der Bearbeitung von Werkstücken**
Electro-erosion machining method, especially wire cutting machining method, and means for securing the cores of the workpieces during the machining operation
Méthode d'usinage de pièces, en particulier usinage par électroérosion de pièces au moyen d'un fil, ainsi que moyen de fixation du coeur lors de l'usinage

(30) Priorität: 23.05.1991 DE 4116868
(43) Veröffentlichungstag der Anmeldung: 25.11.1992
(73) Patentinhaber: AG für industrielle Elektronik AGIE Losone bei Locarno, CH-6616 Losone/Locarno (CH)
(72) Erfinder: Bühler, Ernst, CH-6616 Losone (CH)
(74) Vertreter: Turi, Michael, Dipl.-Phys.

(56) Entgegenhaltungen:
- PATENT ABSTRACTS OF JAPAN vol. 10, no. 295 (M-523)(2351) 7. Oktober 1986 & JP-A-61 109 617 (INOUE JAPAX RES INC) 28 Mai 1986
- PATENT ABSTRACTS OF JAPAN vol. 11, no. 57 (M-564)(2504) 21. Februar 1987 & JP-A-61 219 528 (FANUC LTD) 29 September 1986

## Beschreibung

Die Erfindung bezieht sich auf ein Verfahren zur Bearbeitung von Werkstücken, insbesondere zur funkenenerosiven Bearbeitung von Werkstücken mittels eines Drahtes nach dem Oberbegriff des Anspruchs 1. Weiterhin bezieht sich die Erfindung auf Mittel zur Sicherung von Formstücken bei der Bearbeitung von Werkstücken nach dem Oberbegriff des Anspruchs 17.

Die Formstücksicherung umfaßt
a) die Ausfall- und/oder die Zentrier- und/oder die Leitfähigkeitssicherung von Ausfallstücken bei der Herstellung von Matrizen und
b) die Ausfall- und/oder die Zentrier- und/oder die Leitfähigkeitssicherung bei der Herstellung von Stempeln.

Wegen der wachsenden Anforderungen an Präzision und Automatisierung der Elektroerosion bedarf die Formstücksicherung der ständigen Weiterentwicklung und Optimierung.

Dabei unterliegt die Formstücksicherung den folgenden Randbedingungen:
a) Auch während der Ausfall- bzw. Zentriersicherung muß zwischen Werkstück und Formstück eine elektrische Leitung bestehen, damit das innere Formstück fertig bearbeitet werden kann (Leitfähigkeitssicherung). Die elektrische Leitung soll möglichst einfach hergestellt werden, was bei bereits vollständig ausgeschnittenen Werkstücken problematisch ist. So ist es beispielsweise üblich, ein Formstück festzukleben und zusätzlich eine elektrische Verbindung zwischen dem Formstück und dem Werkstück herzustellen.
b) Das Formstück darf sich durch die Sicherung nicht verschieben, d.h., es muß eine starre Positionierung des Formstückes gewährleistet sein (Zentriersicherung).
c) Die Formstücke müssen einfach herausnehmbar sein, damit eine erodierte Matrize oder Patrize nicht beschädigt wird.

Ein besonderes Interesse besteht an Formstücksicherungen, die einfach und billig (z.B. auch ausschließlich durch Softwareerweiterungen) installiert werden können.

Die Erfindung zielt darauf ab, die Formstücksicherung zu vereinfachen und zu verbessern.

Dieses Ziel wird bei einem gattungsgemäßen Verfahren durch die kennzeichnenden Merkmale des Anspruchs 1 erreicht.

Das Anordnen der Mittel im Bearbeitungsspalt sichert das Formstück auf einfache Weise gegen Verschieben und Ausfallen, wodurch insbesondere die Präzisionsbearbeitung erleichtert wird. Die Sicherung ist auch für konische Werkstücke geeignet, d.h. sie ist von der Werkstückgeometrie weitgehend unabhängig. Auch Formstücke mit komplizierteren Konturen wie z.B. Zahnräder können gesichert werden. Die Bewegungsfreiheit der Draht-Führungsköpfe wird nicht beeinträchtigt.

Ein besonderer Vorteil des erfindungsgemäßen Verfahrens besteht darin, daß es bei jeder Maschine unkompliziert und auch ohne Erweiterungen der Maschine angewendet werden kann. Die separaten Mittel können entweder manuell von außen in den Bearbeitungsspalt eingesetzt werden, oder das Verfahren wird durch den besonders bevorzugten Schritt des Anspruches 2 weiter automatisiert.

In Hinsicht auf ein Mittel zur Sicherung von Formstücken bei der Bearbeitung von Werkstücken wird das anfangs erwähnte Ziel durch die kennzeichnenden Merkmale des Anspruchs 17 erreicht. Das Mittel sichert das Formstück durch Reibungs- und/oder Presskräfte im Werkstück. Zum Herausnehmen des Mittels muß also keine feste Werkstückverbindung zwischen dem Mittel und dem Formstück und/oder dem Werkstück durchbrochen oder durchtrennt werden. Es wird ein Mittel geschaffen, mit dem die Ausfall- und Zentriersicherung von Formstücken vereinfacht und verbessert wird. Insbesondere kann das Formstück durch die erfindungsgemäßen Mittel besonders gut im Bearbeitungsspalt zentriert werden, so daß der Bearbeitungsspalt seine vorgegebene Breite behält.

Der übergeordnete Grundgedanke der Erfindung besteht also im Zentrieren und Festpressen bzw. -halten des Formstückes im Werkstück durch ein - eventuell auch nur teilweiseim Bearbeitungsspalt angeordnetes separates Mittel. Das Verfahren bzw. die Mittel können zur ausschließlichen oder zur unterstützenden Ausfall- und/oder Zentrier- und/oder Leitfähigkeitssicherung genutzt werden. Die drei eingangs genannten Bedingungen (a, b, c) werden durch die Erfindung erfüllt.

Besonders bevorzugt werden die Mittel aus dem Werkstück oder aus dem Formstück abgetrennt (Anspruch 2). Die Mittel sind damit separat von Formstück und Werkstück und können problemlos der geometrischen Form des Bearbeitungsspaltes angepaßt werden. Das Abtrennen (z.B. Schneiden) der Mittel aus dem Formstück oder aus dem Werkstück macht das Verfahren zur Bearbeitung von Matrizen und Patrizen gleichermaßen geeignet, da die erfindunggemäßen Mittel jeweils aus dem nicht weiterzuverwendenden Gegenstück - bei der Matrize das Ausfallstück und bei der Patrize das Restwerkstück - geschnitten werden. Gleichzeitig wird ein elektrischer Kontakt zwischen Werkstück und Formstück hergestellt, da das Mittel aus dem leitenden Werkstückmaterial besteht. Da keine Notwendigkeit in der Verwendung eines zusätzlichen Verbrauchsstoffes (bzw. eines weiteren Materials) besteht, erhöht das Verfahren die Korrisionsgefahr nicht. Ein besonderer Vorteil des Verfahrens nach Anspruch 2 liegt darin, daß eine unbeaufsichtigte Bearbeitung des Werkstückes möglich wird. Die Maschine kann nach einem vorgegebenen Algorithmus optimale Fixierpunkte bzw. -flächen der Werkstückkontur selbstätig berechnen und ausschneiden. Damit wird die Erosion weiter automatisiert.

Besonders bevorzugt werden die Mittel durch winklige Schnittbewegungen von Drahtführungen in der X/Y- bzw. der U/V-Ebene ausgeschnitten (Anspruch 3), d.h. die normale Software der Maschine braucht nicht um spezielle Schnittfunktionen erweitert werden. Es ist zwar möglich, das erfindungsgemäße Verfahren so weit zu automatisieren, das ein Rechner die günstigsten Stellen zur Anordnung der Mittel bestimmt (s.o.), generell können die Konturen der Mittel jedoch auch in herkömmlicherweise analog einer zu erodierenden "normalen" Formstückkontur eingegeben werden.

Bevorzugt werden die Mittel an diagonalen Stellen der Schnittkontur, d.h. der Bearbeitungsspaltkontur, angeordnet bzw. ausgeschnitten (Anspruch 4). Damit ist das Formstück durch die Anordnung der Mittel kippfrei zentriert, die Mittel drücken jeweils von gegenüberliegenden Stellen gleich stark auf das Formstück.

Wird das Mittel bereits vor seiner Verwendung vollständig aus dem Werkstück geschnitten und durch eine Einrichtung wie eine Halterung oder einen Magneten bis zu seiner Verwendung an einem Absinken in den Bearbeitungsspalt gehindert (Anspruch 5) kann das Mittel ohne Beeinträchtigung der Bewegungsmöglichkeiten des Erodierdrahtes bereits während des ersten Vorschnittes oder zumindest vor der Fein- oder Nachbearbeitung vorgeschnitten werden. Der Bearbeitungsspalt bleibt bezüglich weiterer Nachschnitte für den Erodierdraht voll zugänglich. Analoges gilt für eine Bearbeitung nach Anspruch 6, bei der das Mittel während eines Bearbeitungsstadiums, in dem das Formstück noch über einen Steg mit dem Werkstück verbunden ist, bis auf eine Restverbindung vorgeschnitten und bei Bedarf vom übrigen Werkstück abgetrennt wird.

Ein erosives Durchtrennen noch bestehender Verbindungen zwischen dem Werkstück und dem Formstück während der Anwendung des Mittels (Anspruch 7) ermöglicht eine gratfreie Bearbeitung des Formstückes. Eine nichterosive Nachbearbeitung eines stehen bleibenden Restgrates entfällt.

Bevorzugt wird während der Verwendung des Mittels die elektrische Verbindung zwischen dem Formstück und dem Werkstück durch das Mittel verbessert bzw. ganz hergestellt, so daß das Formstück problemlos weiterbearbeitet werden kann (Anspruch 8).

Wenn das Mittel so aus dem Werkstück geschnitten wird, daß wenigstens eine Fläche des Mittels an den Bearbeitungsspalt angrenzt, so daß das Mittel nach einem vollständigen Durchtrennen seiner Verbindungsflächen zum Werk- bzw. Formstück in den Bearbeitungsspalt absinkt, sind keine besonderen Vorrichtungen oder Maßnahmen zum Einsetzen des Mittels in den Bearbeitungsspalt erforderlich (Anspruch 9).

Bevorzugt wird das Mittel zum Herausnehmen des Formstükkes nach der Beendigung der Werkstückbearbeitung problemlos durch Umdrehen des Werkstückes entlastet (Anspruch 10), ohne daß die Werkstück- oder Formstückkonturen beschädigt werden.

Eine gute Haftung bei gleichzeitig einfacher Schnittgeometrie ergibt sich, wenn als Mittel Werkstückabschnitte in Keilform (Anspruch 10) verwendet werden.

Wird bevorzugt die in den Bearbeitungsspalt zeigende Spitze des Mittels mit zunehmender Höhe des Werkstückes spitzwinkliger geschnitten (Anspruch 12), kann insbesondere zum Ausschneiden mehrerer Formstücke aus einem Werkstück materialsparend gearbeitet werden.

Eine besonders große Haftung und eine gute elektrisch leitende Verbindung zwischen Werkstück und Formstück ergibt sich, wenn das Mittel durch ein Werkzeug, insbesondere durch einen Pressdorn, in den Bearbeitungsspalt gepresst wird (Anspruch 13). Eine separate Pressdorneinrichtung entfällt, wenn das Mittel durch eine Startbohrlochvorrichtung in den Bearbeitungsspalt gedrückt wird (Anspruch 14). Die besondere Zentrierwirkung des Verfahrens wird genutzt, wenn während der Anwendung der Mittel eine Gegenkraft von unten und/oder eine andere Sicherungsmethode zusätzlich die Ausfallsicherung ergänzend unterstützt(en) (Anspruch 15).

Eine völlige Automatisierung des erfindungsgemäßen Verfahrens wird durch den besonders bevorzugten Ergänzungsschritt des Anspruches 16 erreicht. Dabei werden Anordnung und Geometrie der erfindungsgemäßen Mittel (3) im Werkstück (1) automatisch durch geeignete Steuerungssoftware bestimmt. Das Bedienungspersonal erfährt somit durch das erfindungsgemäße Verfahren eine optimale Entlastung.

Die besonders bevorzugte keilförmige Ausgestaltung der erfindungsgemäßen Mittel ermöglicht ein unkompliziertes Anordnen und Einpressen der erfindungsgemäßen Mittel in den Bearbeitungsspalt (Anspruch 18).

Weitere bevorzugte Merkmale der Erfindung ergeben sich aus der nachfolgenden Beschreibung bevorzugter Ausführungsbeispiele. Diese Ausführungsbeispiele sind schematisch in der beigefügten Zeichnung dargestellt, die auch den Unterschied zwischen erfindungsgemäßen Vorrichtungen und dem bereits geschilderten Stand der Technik veranschaulicht.

In der Zeichnung zeigen:
- Fig. 1: eine Draufsicht auf zwei bereits vollständig ausgeschnittene Formstücke, die in einem Werkstück durch das erfindungsgemäße Verfahren gegen Ausfallen gesichert werden;
- Fig 2A-2E: ein Werkstück, aus dem ein rechteckiges Formstück ausgeschnitten werden soll, in verschiedenen aufeinanderfolgenden Bearbeitungsstadien
- Fig. 3: eine Draufsicht auf eine noch nicht vollständig ausgeschnittene zylindrische Patrize, mit zur Ausfallsicherung vorbereiteten erfindungsgemäßen Mitteln in Keilform;
- Fig. 4: eine Draufsicht auf eine vollständig ausgeschnittene Matrize, in der ein Ausfallstück durch erfindungsgemäße Mittel gesichert wird;
- Fig. 5: einen Schnitt durch ein Werkstück, in dem ein Formstück durch einen Keil nach dem erfindungsgemäßen Verfahren gesichert wird;
- Fig. 6: einen Schnitt durch ein in Relation zur Fig. 4 höheres Werkstück, in dem ein Formstück durch einen Keil nach dem erfindungsgemäßen Verfahren gesichert wird;
- Fig. 7: eine Ansicht einer Bearbeitungsspaltkontur eines Werkstückabschnittes, aus dem ein erfindungsgemäßer Keil ausgeschnitten wurde;
Im folgenden wird eine Terminologie verwendet, die der leichteren Lesbarkeit der Beschreibung dient, jedoch nicht einschränkend zu verstehen ist. Beispielsweise beziehen sich die Ausdrücke oben, unten, größer, kleiner usw. auf Maschinen Werkstücke in üblicher Arbeitsaufstellung und Größe sowie auf in üblicher Weise auf einem Maschinentisch angeordnete Werkstücke und Formstücke. Unter den Begriffen "keilfömige Mittel" bzw. "Keil" sind verschiedene geometrische Körper zusammengefaßt, denen gemeinsam ist, daß sie eine Grundfläche und einen den Körper - bevorzugt bis zu einer Kante oder einer spitzwinkligen Ecke - verjüngenden Abschnitt besitzen. Unter diese Definition fallen üblicherweise Pyramiden, im Sinne der Erfindung sind unter "Keil" jedoch auch Tetraeder, (längs durchgetrennte) Kegel, Viertelkugeln, schief abgeschnittene Würfel oder Kreiszylinder sowie verschiedene, der Formstückkontur angepaßte, unregelmäßige geometrische Körper mit einem verjüngenden Abschnitt zu verstehen.

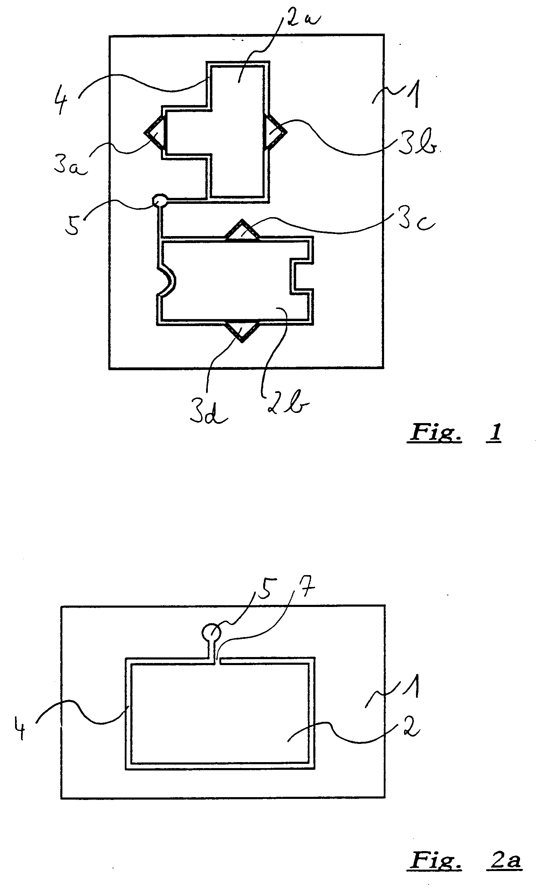

Die Möglichkeiten des erfindungsgemäßen Verfahrens werden besonders gut in Fig. 1 veranschaulicht. Ein Werkstück 1 mit zwei bereits vollständig ausgeschnittenen Formstücken - zwei Patrizen - 2a, 2b wird durch Keile 3a, 3b, 3c, 3d gegen Ausfallen gesichert. Die Keile 3a, 3b, 3c, 3d sind in einem Bearbeitungsspalt 4 zwischen dem Werkstück 1 und den ausgeschnittenen Formstücken 2a bzw 2b angeordnet. Die Keile 3a, 3b, 3c, 3d klemmen gerade so fest im Bearbeitungsspalt 4, daß sie die Werkstücke 2a und 2b in mehrfacher Weise sichern: zum Einen gegen Ausfallen (Ausfallsicherung) und zum Anderen gegen Verschieben (Zentriersicherung). Ein Bohrloch 5 dient zum anfänglichen Einfädeln des (nicht abgebildeten) Erodierdrahtes.

Besonders bevorzugt besitzen die Keile 3 eine senkrecht zum Bearbeitungsspalt 4 angeordnete Grundfläche, sowie eine einer Teilfläche des Bearbeitungsspaltes 4 angepaßte und zugewandte Außenfläche. Weiterhin sind bevorzugt zwei Außenflächen in einem Winkel von 90° zueinander angeordnet. Diese zwei Außenflächen verjüngen den Keil 3 nach unten hin spitzwinklig. Sie liegen auf zwei entsprechenden Gegenflächen auf - bei der Fertigung von Matrizen im Formstück 2 und bei der Fertigung von Patrizen im Restwerkstück 1. Diese Auflageflächen sind in den Figuren 1, 2, 3, 4 und 7 durch Schraffuren kenntlich gemacht.

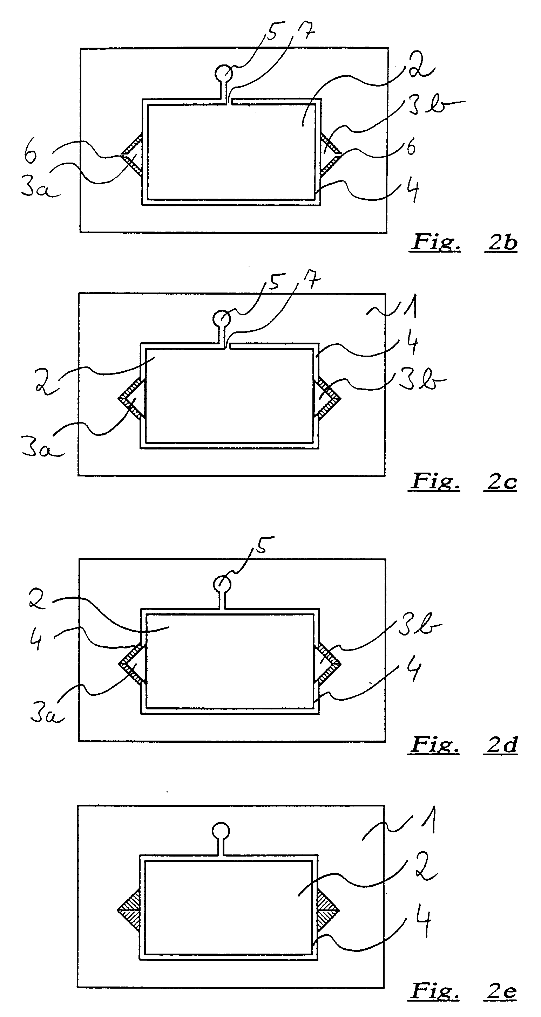

Das erfindungsgemäße Verfahren läuft bevorzugt in der nachfolgend beschriebenen Weise ab (Fig. 2A - 2E):
Nach dem Einfädeln des Erodierdrahtes wird das Formstück 2 bis auf einen stehenbleibenden Reststeg 7 ausgeschnitten (Vollschnitt: Fig 2A). Dann werden die Keile 3a und 3b jeweils durch zwei winklige Schnittbewegungen der U-/V- und/oder der X-/Y- Drahtführungsköpfe bis auf Restverbindungen (bzw. Fixierpunkte) 6 vorgeschnitten, über welche die Keile 3 gerade noch am Werkstück 1 befestigt sind (Fig 2B). Einer der Schnitte kann auch seitlich aus dem Werkstück herausgeführt werden. Das Werkstück 1 wird jetzt z.B. durch einen Nachschnitt weiterbearbeitet.
Daran anschließend wird der Erosionsdraht an den Reststeg 7 gefahren. Die Restverbindungen 6 werden durchtrennt (Fig. 2c), bevorzugt mit einem Preßwerkzeug wie z.B. einem Preßdorn 8. Die Restverbindungen 6 können auch durchschnitten werden. Die Keile 3a und 3b werden durch den Preßdorn 8 gerade so fest in den Bearbeitungsspalt 4 gepreßt, daß die Haftreibung bzw. der Druck zwischen Werkstück 1 und Formstück 2 das Formstück 2 gegen sein Fallbestreben im Werkstück 1 arretieren. Hierauf wird der stehengelassene Reststeg 7 erosiv durchtrennt und eventuell nachgeschnitten (Fig. 2d). Nach dem Schneidevorgang wird das Werkstück 1 durch Umdrehen entlastet und die Keile 3a, 3b können zusammen mit dem Formstück 2 leicht herausgenommen werden (Fig. 2e).

Ein großer Vorteil der erfindungsgemäßen Ausfallsicherung besteht in der Möglichkeit der Ergänzung bekannter Sicherungsmethoden. Eine dieser Methoden besteht darin, beim Schneiden eines Formstückes 2 einen Verbindungssteg 7 zum Werkstück 1 stehen zu lassen, der nach Beendigung des Schneidevorganges durchbrochen werden muß. Das Durchbrechen des Verbindungssteges 7 läßt einen Grat stehen, der bei mit hoher Präzision zu schneidenden Formstücken 2 unter Umständen einen Nachbearbeitungsvorgang - zum Beispiel ein Nachfeilen - erfordert. Eventuell ist ein Nachbearbeiten gar nicht oder nur sehr schwer möglich. Bei einer Kombination mit dem erfindungsgemäßen Verfahren wird die Nachbearbeitung durch einen Erosionsschnitt ersetzt. Das Formstück 2 wird vollständig erosiv zu Ende bearbeitet, ohne das ein störender Grat stehenbleibt.

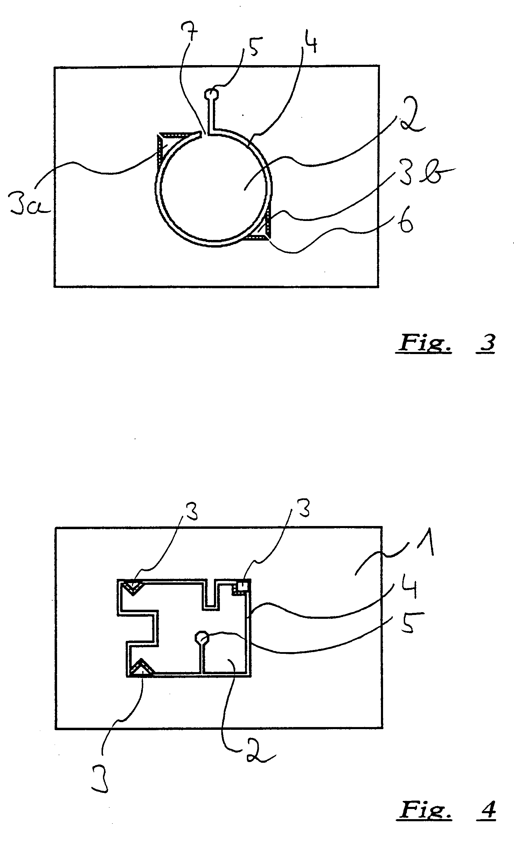

In Fig. 3 wird die Besonderheit, daß die Ausfallsicherungsmittel 3 durch das Ausschneiden stets der Geometrie von Formstück 2 und Werkstück 1 angepaßt sind, anhand eines Formstückes 2 mit einer zylinderförmigen Oberfläche illustriert. Die dem Bearbeitungsspalt zugewandte Seite der Keile 3a und 3b besitzt eine der zylinderförmigen Außenkontur des Formstückes angepaßte Einbuchtung. Die Keile 3a, 3b wurden bereits vorgeschnitten, es bestehen jedoch noch die kleinflächigen Restverbindungen 6 zwischen den Keilen 3a, 3b und dem Werkstück 1, die ein Absinken der Keile 3a, 3b in den Bearbeitungsspalt 4 verhindern.-Das Formstück 2 ist noch über den Reststeg 7 mit dem Werkstück 1 verbunden. Werden beim Schneiden der Keile 3 keine Restverbindungen 6 stehen gelassen, ist es denkbar, die Keile 3 bis zu ihrer Verwendung durch einen (nicht abgebildeten) Magneten daran zu hindern, in den Bearbeitungsspalt 4 abzusinken.

Die Fig. 1, 2, 3 und 4 zeigen die Eignung des erfindungsgemäßen Verfahrens für verschiedenste zu schneidende Formstückkonturen. Fig. 1 illustriert, daß bei geeigneter Größe der Mittel 3 mehrere Formstücke 2 in ein Werkstück 1 geschnitten werden können, ohne das die Bewegungsfreiheit der Drahtführungsköpfe (nicht abgebildet) beeinträchtigt wird. In Fig. 3 wird die Bearbeitung eines zylinderförmigen Formstückes 2 gezeigt, in Fig. 4 das Schneiden einer komplizierter geformten Matrize. Die dem Bearbeitungsspalt 4 zugewandten Flächen des zumindest einen Keiles 3 sind dabei stets den angrenzenden Außenflächen des Formstückes 2 und des Werkstückes 1 angepaßt (durch das Herstellen der Keile 3 durch Erosionstrennschnitte). Dadurch wird zwischen Formstück 2 und Werkstück 1 eine maximale Haftung erreicht. Diese Haftung verbessert auch den elektrischen Kontakt zwischen Formstück 2 und Werkstück 1 z.B. beim abschließenden Erodieren des Reststeges 7.

Bei einer Matrizenbearbeitung (Fig. 4) wird das erfindungsgemäße Verfahren analog angewandt. Der Hauptunterschied zu den Fig. 1 und 2 besteht darin, daß die Mittel aus dem vorgeschnittenen Form- bzw. Ausfallstück und nicht aus dem Restwerkstück 1 geschnitten werden. Der Keil 3c weist zusätzlich die Besonderheit auf, das er vier Reibflächen - drei zum Formstück und eine zur Matrizebesitzt, was die Haftung zusätzlich verbessert. Besonders gut kommt in Fig. 4 die Besonderheit zum Ausdruck, daß die erfindungsgemäßen Mittel je nach Werkstückgeometrie verschiedenartig ausgeschnitten und angeordnet werden können. Die Keile 3 werden im Werkstück 1 bevorzugt so einander gegenüberliegend angeordnet, daß das Formstück 2 "ausgewuchtet liegt" und nicht durch seitliche Drehkräfte in die Schnittkonturen 4 drückt. Besonders geeignet für die Anordnung der erfindungsgemäßen Mittel 3 sind diagonale Stellen der Schnittkontur 4.

Die besonders bevorzugt verwendete Keilform der erfindungsgemäßen Mittel 3 ergibt sich durch die Kombination der einerseits bereits ausreichenden Haftwirkung und der einfachen Herstellung mit Hilfe von nur wenigen Schnitten.

Das Ausschneiden der Keile 3 wird bevorzugt wie folgt durchgeführt (siehe Fig. 7):
Der Erosionsdraht wird zum Ausschneiden eines Keiles 3 im Bearbeitungsspalt 4 um den Winkel β gekippt. Dann wird der Draht unter einem Winkel von 45° gegen die Bearbeitungsspaltebene so in das Werkstück 1 geführt, daß sich eine Schnittkontur A bildet. Durch einen entsprechenden "gegensinnigen" Schnitt wird eine Schnittkontur B gebildet. Die Konturen A und B schneiden sich somit unter einem Winkel von 90°. Die Schnitte werden bevorzugt so geführt, daß die Restverbindung 6 stehen bleibt.

Denkbar sind z.B. auch konisch ausgeschnittene Keile 3 oder Keile 3 mit mehr als drei oder vier im Bearbeitungsspalt 4 liegenden Außenflächen. Die Haftwirkung nimmt dabei mit der Größe der Reibflächen zu.

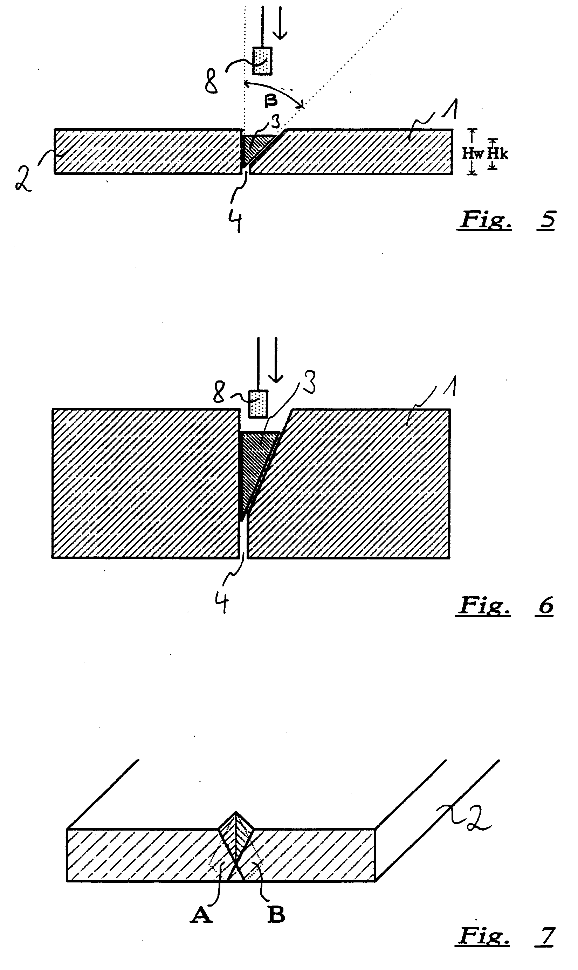

Fig. 5 verdeutlicht die bevorzugte Form der erfindungsgemäßen Keile 3 anhand einer Schnittansicht. Durch ein Preßwerkzeug 8 wird der Keil 3 in den Bearbeitungsspalt 4 gedrückt. Dies wird zusätzlich durch einen Pfeil veranschaulicht. Der Preßdorn 8 kann bevorzugt ein entsprechender Einsatz für die Startbohrlochmaschine sein.

Die optimale Größe eines Winkels β der in den Bearbeitungsspalt 4 zeigenden Spitze des Keiles 3 ist, wie aus einem Vergleich mit der maßstabsgleichen Fig. 6 ersichtlich, eine Funktion der Werkstückhöhe Hw und der Keilhöhe Hk. Als Werkstückhöhe Hw ist der Abstand zwischen der unteren und der oberen Ebene des Werkstückes 1 und als Keilhöhe Hk der Abstand zwischen der Grundfläche und der gegenüberliegenden spitzwinkligen Ecke des Keiles 3 definiert.

Mit abnehmender Werkstückhöhe Hw kann bei gleichbleibender Keilhöhe Hk der Winkel β vergrößert werden, (oder umgekehrt: der Keil 3 kann bei kleinerem Winkel β leichter verkeilt werden), da die auf das Formstück 2 wirkende seitliche Kraft bei konstanter Einsetz-Preßkraft mit zunehmender Winkelgröße β abnimmt. Die Verkeilung darf nur so fest sein, daß im Werkstück 1 und im Formstück 2 keine Spannungen und Verformungen auftreten. Die Funktion hat weitere Variable: so z.B. den Reibungskoeffizienten sowie das Formstückgewicht und das spezifische Werkstoffgewicht. Denkbar sind z.B. auch Keile 3, deren Tiefe Hk der Werkstückhöhe Hw entspricht.

Die erfindungsgemäßen Keile 3 müssen nicht nicht aus dem Werkstück 1 geschnitten werden, es ist auch die Verwendung vorgefertigter Keile 3 möglich, die von außen manuell oder durch eine entsprechende Einrichtung wie einen Magneten (nicht abgebildet) in den - bevorzugt der Keilform angepaßt erodierten - Bearbeitungsspalt 4 gesteckt bzw. gepreßt werden. Werden die Keile 3 stark genug festgepreßt, ist es sogar denkbar, sie von unten in den Bearbeitungsspalt 4 einzusetzen.

Fig. 7 zeigt einen Abschnitt eines Werkstückes oder Ausfallstückes 2, aus dem ein erfindungsgemäßer Keil ausgeschnitten wurde. An der vorderen Kante (Schnittspaltkante) sind - gestrichelt gezeichnet - die beiden zum Erzeugen des Keiles 3 nötigen Schnitte A und B angedeutet. Gut erkennbar ist auch, daß die Schnitte A und B zwar den Keil 3 ausschneiden, daß jedoch ein sich zwischen den Schnittflächen A und B befindlicher unterer Abschnitt 9 nicht herausfallen kann.

Das erfindungsgemäße Verfahren kann durch verschiedene Varianten bzw. Verfahrensschritte ergänzt und verfeinert werden. So können die erfindungsgemäßen Keile 3 bereits während des ersten Vollschnittes vorgeschnitten werden. Das Halten der Keile 3 bis zu ihrer Anwendung kann durch einen Magneten erfolgen. Weiterhin kann die Anwendung der erfindungsgemäßen Keile 3 mit herkömmlichen Ausfallsicherungsmethoden kombiniert werden: Z.B. können das Werkstück 1 und/oder das Formstück 2 zusätzlich von unten gehalten werden. Eine wesentliche Funktion der erfindungsgemäßen Keile 3 liegt dann in der Zentriersicherung des Formstückes 2. Unter Umständen kann das reine "Halten" ganz durch andere Methoden erfolgen und nur die Zentrier- und/oder die Leitfähigkeitssicherung des erfindungsgemäßen Keiles 3 ausgenutzt werden.

Das erfindungsgemäße Verfahren ist nicht auf "senkrecht" nach unten verlaufende Bearbeitungsspalte 4 - siehe Fig. 4 und 5 - beschränkt. Werden die Keile 3 fest genug in den Bearbeitungsspalt 4 gedrückt, kann das Verfahren auch bei schrägt verlaufenden Bearbeitungsspalten 4 angewandt werden. Beispielsweise können die Keile 3 auch dazu verwendet werden, ein konisches Formstück 2 - mit einem entsprechend konisch verlaufenden Bearbeitungsspalt 4 -, das gegen ein Ausfallen durch seine Form gesichert ist, im Bearbeitungsspalt so zu zentrieren, daß es bei dem Durchschneiden der Restverbindung 7 nicht in den Bearbeitungsspalt absinkt und den Spalt 4 versperrt.

## Patentansprüche

1. Verfahren zur Bearbeitung von Werkstücken, insbesondere zur funkenenerosiven Bearbeitung von Werkstücken (1) mittels eines Drahtes, bei dem
a) ein Bearbeitungsspalt (4) zwischen Formstück (2) und Werkstück gebildet,
b) ein Formstück (2) aus dem Werkstück geschnitten und
c) das Formstück (2) gesichert wird,
dadurch gekennzeichnet, daß
d) das Formstück (2) durch wenigstens zwei im Bearbeitungsspalt (4) angeordnete Mittel (3) gesichert und zentriert wird, und
e) die Mittel (3) aus dem Werkstück (1) oder aus dem Formstück (2) abgetrennt werden.

2. Verfahren nach Anspruch 1, dadurch gekennzeichnet, daß das Mittel (3) durch winklige Schnittbewegungen von Drahtführungen in der X/Y- bzw. der U/V-Ebene ausgeschnitten wird.

3. Verfahren nach einem der Ansprüche 1 oder 2, dadurch gekennzeichnet, daß das Mittel (3) an diagonalen Stellen der Schnittkontur (4), d.h. der Bearbeitungsspaltkontur, angeordnet bzw. ausgeschnitten wird.

4. Verfahren nach einem der vorstehenden Ansprüche, dadurch gekennzeichnet, daß das Mittel (3)
a) bereits vor seiner Verwendung vollständig aus dem Werkstück (1) geschnitten, und
b) durch eine Einrichtung wie eine Halterung oder einen Magneten bis zu seiner Verwendung an einem Absinken in den Bearbeitungsspalt (4) gehindert wird.

5. Verfahren nach einem der vorstehenden Ansprüche, dadurch gekennzeichnet, daß das Mittel (3) während eines Bearbeitungsstadiums, in dem das Formstück (2) noch über einen Steg (7) mit dem Werkstück (1) verbunden ist,
a) bis auf eine Restverbindung (6) vorgeschnitten und
b) bei Bedarf vom übrigen Werkstück (1) abgetrennt wird.

6. Verfahren nach einem der vorstehenden Ansprüche, dadurch gekennzeichnet, daß während der Verwendung des Mittels (3) noch bestehende Verbindungen (7) zwischen dem Werkstück (1) und dem Formstück (2) erosiv durchtrennt und nachbearbeitet werden.

7. Verfahren nach einem der vorstehenden Ansprüche, dadurch gekennzeichnet, daß während der Verwendung des Mittels (3) die elektrische Verbindung zwischen dem Formstück (2) und dem Werkstück (1) durch das Mittel (3) verbessert bzw. ganz hergestellt wird.

8. Verfahren nach einem der vorstehenden Ansprüche, dadurch gekennzeichnet, daß das Mittel (3) so aus dem Werkstück (1) geschnitten wird, daß wenigstens eine Fläche des Mittels (3) an den Bearbeitungsspalt (4) angrenzt, so daß das Mittel (3) nach einem vollständigen Durchtrennen seiner Verbindungsflächen zum Werk- bzw. Formstück (2) in den Bearbeitungsspalt (4) absinkt.

9. Verfahren nach einem der vorstehenden Ansprüche, dadurch gekennzeichnet, daß das Mittel (3) nach der Beendigung der Werkstückbearbeitung durch Umdrehen des Werkstückes (1) entlastet wird.

10. Verfahren nach einem der vorstehenden Ansprüche, dadurch gekennzeichnet, daß als Mittel (3) Werkstückabschnitte in Keilform verwendet werden.

11. Verfahren nach Anspruch 10, dadurch gekennzeichnet, daß die in den Bearbeitungsspalt (4) zeigende Ecke des Mittels (3) mit zunehmender Höhe des Werkstückes (1) spitzwinkliger geschnitten wird.

12. Verfahren nach einem der vorstehenden Ansprüche, dadurch gekennzeichnet, daß das Mittel (3) durch ein Werkzeug, insbesondere durch einen Pressdorn (8), in den Bearbeitungsspalt (4) gepresst wird.

13. Verfahren nach einem der vorstehenden Ansprüche, dadurch gekennzeichnet, daß das Mittel (3) durch eine Startbohrlochvorrichtung in den Bearbeitungsspalt (4) gedrückt wird.

14. Verfahren nach einem der vorstehenden Ansprüche, dadurch gekennzeichnet, daß während der Anwendung der Mittel (3) eine Gegenkraft von unten und/oder eine andere Sicherungsmethode zusätzlich die Ausfallsicherung ergänzt.

15. Verfahren nach einem der vorstehenden Ansprüche, dadurch gekennzeichnet, daß Anordnung und Geometrie der erfindungsgemäßen Mittel (3) im Werkstück (1) automatisch durch geeignete Steuerungssoftware bestimmt wird.

16. Mittel zur Sicherung von Formstücken (4) bei der Bearbeitung von Werkstücken (1), insbesondere zur Ausfall- und Zentrieriersicherung beim elektroerosiven Schneiden, dadurch gekennzeichnet, daß das Mittel (3) ein aus dem Werkstück (1) herauserodiertes, eigenständiges Teil ist, welches separat im Bearbeitungsspalt (4) zwischen Formstück (2) und Werkstück (1) anordenbar ist.

17. Mittel nach Anspruch 16, gekennzeichnet durch eine keilförmige Ausgestaltung.

## Claims

1. Method for the machining of workpieces, in particular for the spark erosion machining of workpieces (1) by means of a wire in which
a) a machining gap (4) between shaped part (2) and workpiece is formed,
b) a shaped part (2) is cut out of the workpiece, and
c) the shaped part (2) is secured,
characterised in that
d) the shaped part (2) is secured and centred by at least two means (3) arranged in the machining gap (4), and
e) the means (3) are separated out of the workpiece (1) or out of the shaped part (2).

2. Method according to claim 1, characterised in that the means (3) are cut out by angled cutting movements of wire guides in the X/Y or U/V plane.

3. Method according to one of the claims 1 or 2, characterized in that the means (3) is arranged or cut out at diagonal positions of the cut contour (4), ie of the contour of the machining gap.

4. Method according to one of the preceding claims characterised in that the means (3)
a) is already completely cut out of the workpiece (1) prior to its use, and
b) until its use is prevented by a device such as a support or a magnet from sinking down into the machining gap (4).

5. Method according to one of the preceding claims, characterised in that during a machining stage in which the shaped part (2) is still connected through a web (7) to the workpiece (1), the means (3)
a) is precut except for a residual connection (6), and
b) is separated as required from the remaining workpiece (1).

6. Method according to one of the preceding claims, characterised in that during the use of the means (3), connections (7) still existing between the workpiece (1) and the shaped part (2) are separated by erosion and finished.

7. Method according to one of the preceding claims, characterised in that during the use of the means (3), the electrical connection between the shaped part (2) and the workpiece (1) is established better or completely by the means (3).

8. Method according to one of the preceding claims, characterised in that the means (3) is cut out of the workpiece (1) in such a manner that at least a surface of the means (3) borders on the machining gap (4) so that the means sinks down into the machining gap (4) after complete separation of its connecting surfaces to the workpiece or shaped part (2).

9. Method according to one of the preceding claims, characterised in that the means (3) is relieved after completion of the machining of the workpiece by rotation of the workpiece (1).

10. Method according to one of the preceding claims, characterised in that workpiece segments in wedge shape are used as means (3).

11. Method according to claim 10, characterised in that the corner of the means (3) pointing into the machining gap (4) is cut at a more acute angle as the height of the workpiece (1) increases.

12. Method according to one of the preceding claims, characterised in that the means (3) is pressed into the machining gap (4) by means of a tool, in particular by means of a press mandrel (8).

13. Method according to one of the preceding claims, characterised in that the means (3) is pushed by an initial auger-hole device into the machining gap (4).

14. Method according to one of the preceding claims, characterised in that during the use of the means (3) an opposing force from below and/or another securing method additionally supplements the drop-out securing.

15. Method according to one of the preceding claims, characterised in that the arrangement and geometry of the means (3) according to the invention in the workpiece (1) is determined automatically by suitable control software.

16. Means for the securing of shaped parts (4) during the machining of workpieces (1), in particular for the drop-out and centring securing during cutting by electroerosion, characterised in that the means (3) is an independent part eroded out of the workpiece (1) which can be arranged separately in the machining space (4) between the shaped part (2) and workpiece (1).

17. Means according to claim 16, characterised by a wedge-shaped design.

## Revendications

1. Méthode d'usinage de pièces, en particulier usinage par électroérosion de pièces (1) au moyen d'un fil, avec laquelle
a) une fente d'usinage (4) est formée entre la pièce moulée (2) et la pièce d'oeuvre,
b) une pièce moulée (2) est coupée à partir de la pièce d'oeuvre et
c) la pièce moulée (2) est fixée/protégée,
caractérisée en ce que
d) la pièce moulée (2) est bloquée et centrée par au moins deux moyens (3) disposés dans la fente d'usinage (4), et
e) les moyens (3) sont détachés à partir de la pièce d'oeuvre (1) ou de la pièce moulée (2).

2. Méthode selon la revendication 1, caractérisée en ce que le moyen (3) est découpé par des mouvements de coupe anguleux de guidefil dans le plan X/Y et le plan U/V.

3. Méthode selon l'une quelconque des revendications 1 ou 2, caractérisée en ce que le moyen (3) est disposé et découpé à des endroits diagonaux du contour de coupe (4), c'est à dire du contour de la fente d'usinage.

4. Méthode selon l'une quelconque des revendications précédentes, caractérisée en ce que le moyen (3)
a) est coupé complètement à partir de la pièce d'oeuvre (1) avant même son utilisation et
b) est empêché par un dispositif, tel un support ou un aimant, jusqu'à son utilisation de s'enfoncer dans la fente d'usinage (4).

5. Méthode selon l'une quelconque des revendications précédentes, caractérisée en ce que le moyen (3)
a) est pré-coupé à l'exception d'un assemblage résiduel (6) et
² b) est séparé éventuellement du reste de la pièce d'oeuvre (1)
pendant un stade d'usinage où la pièce moulée (2) est encore reliée à la pièce d'oeuvre (1) par une barrette (7).

6. Méthode selon l'une quelconque des revendications précédentes, caractérisée en ce que, au cours de l'utilisation du moyen (3), des liaisons (7) encore existantes entre la pièce d'oeuvre (1) et la pièce moulée (2) sont séparées et retouchées par érosion,

7. Méthode selon l'une quelconque des revendications précédentes, caractérisée en ce que la liaison électrique entre la pièce moulée (2) et la pièce d'oeuvre (1) est améliorée ou établie complètement par le moyen pendant l'utilisation du moyen (3).

8. Méthode selon l'une quelconque des revendications précédentes, caractérisée en ce que le moyen (3) est coupé à partir de la pièce d'oeuvre (1) de telle façon qu'au moins une surface du moyen (3) est contigue à la fente d'usinage (4), de sorte que le moyen (3) descend dans la fente d'usinage (4) après une séparation complète de ses surfaces de liaison avec la pièce d'oeuvre ou la pièce moulée (2).

9. Méthode selon l'une quelconque des revendications précédentes, caractérisée en ce que le moyen (3) est soulagé après la fin de l'usinage de la pièce d'oeuvre par rotation de la pièce (1).

10. Méthode selon l'une quelconque des revendications précédentes, caractérisée en ce qu'on utilise comme moyens (3) des découpes de pièce d'oeuvre en forme de clavette.

11. Méthode selon la revendication 10, caractérisée en ce que le coin du moyen (3) dirigé vers la fente d'usinage (4) est coupé avec un angle qui devient plus aigu avec l'augmentation de la hauteur de la pièce d'oeuvre (1).

12. Méthode selon l'une quelconque des revendications précédentes, caractérisée en ce que le moyen (3) est enfoncé par pression dans la fente d'usinage (4) au moyen d'un outil, notamment au moyen d'un mandrin de pression (8).

13. Méthode selon l'une quelconque des revendications précédentes, caractérisée en ce que le moyen (3) est appuyé par un dispositif pour trou de perçage de démarrage dans la fente d'usinage (4).

14. Méthode selon l'une quelconque des revendications précédentes, caractérisée en ce que, au cours de l'utilisation des moyens (3), une force antagoniste venant d'en bas et/ou une autre méthode de sécurité complète en supplément la sécurité antichute.

15. Méthode selon l'une quelconque des revendications précédentes, caractérisée en ce que la disposition et la géométrie des moyens (3) selon l'invention dans la pièce d'oeuvre (1) sont déterminées automatiquement par des logiciels de commande appropriés.

16. Moyens pour la sécurité des pièces moulées (4) lors de l'usinage de pièces (1), notamment pour la sécurité antichute et la sécurité de centrage lors du découpage par électroérosion, caractérisée en ce que le moyen (3) est une pièce érodée à partir de la pièce d'oeuvre (1) et autonome qui peut être disposée séparément dans la fente d'usinage entre la pièce moulée (2) et la pièce d'oeuvre (1).

17. Moyen selon la revendication 16, caractérisée par une conception en forme de clavette.
